# EUROPEAN PATENT SPECIFICATION

(11) **EP 2 010 375 B1**
(45) Date of publication and mention of the grant of the patent: **02.04.2025**
(21) Application number: 07747280.1
(22) Date of filing: 12.04.2007
(51) Int. Cl.: B32B 3/12, B32B 3/18, B32B 3/22, B32B 21/13, E04C 2/36, E04G 1/15, E04G 5/08

(54) **PANEL AND USE OF SUCH A PANEL AS A SCAFFOLDING BOARD OR A BUILDING PANEL**
PLATTE UND VERWENDUNG SOLCH EINER PLATTE ALS EINE GERÜSTPLATTE ODER EINE BAUPLATTE
PANNEAU ET SON UTILISATION COMME PLANCHE D'ÉCHAFAUDAGE OU COMME PANNEAU DE CONSTRUCTION

(30) Priority: 13.04.2006 NL 1031585
(43) Date of publication of application: 07.01.2009
(73) Proprietor: Dekker Groep B.V., 2761 JP Zevenhuizen (NL)
(72) Inventor: VAN DER HORST, Mark, Wessel, 2015 LL Haarlem (NL); VAN DER HORST, Diederick, 7391 EC Twello (NL)
(74) Representative: Nederlandsch Octrooibureau
(86) International application number: PCT/NL2007/000098
(87) International publication number: WO 2007/120037

(56) References cited:
- WO-A1-2004/055312
- WO-A1-2005/040524
- WO-A1-90/04515
- DE-A1- 10 030 721
- US-A- 3 844 231
- US-A- 3 872 641

## Description

The present invention relates to a panel comprising two parallel skin plates made of wood or a wood material, between which ribs extend for stiffening the panel.

Such panels are known, they are used inter alia for doors in houses. The skin plates are made of plywood and form the outer sides of the door. Present between the skin plates is a honeycomb structure of cardboard, which functions to stiffen the door. Such a panel is in itself suitable for use with a door that separates two internal spaces of a building from each other, but it is less suitable for taking up comparatively large forces. Thicker skin plates, and in some cases even solid wood, are used for relatively heavy applications. In the case of doors, the skin plates are provided on a framework. In some cases the framework comprises cross slats, which extend between circumferential edges of the framework. Said cross slats are not regarded as ribs in the present document. Ribs can be distinguished from the framework in that they are made of a different material and/or have a different thickness.

Various documents relating to panels are known.

WO 2004055312 (A1) relates to a wooden door with panel ribs in the hollow core of the door wherein the ribs are made from scrap wood pieces. Since the scrap wood pieces are usually too short for this purpose, a method is also described that teaches means to connect the ribs made from the scrap wood pieces into useful lengths by the use of notches, connector blocks and conventional fasteners.

DE 10030721 (A1) relates to a squared wood comprising two stabilizing core elements made of at least one wooden material or at least one bamboo-type material which is positioned between at least two covering layers and are enclosed by two edge elements. The two stabilizing core elements may be made of MDF. Between the two stabilizing core elements a an open space is provided to receive an isolating material.

WO 9004515 (A1) relates to structural elements and furniture components which are manufactured by positioning laths made of solid wood or particle board, parallel to each other on a glue-coated panel which may consist of MDF, whereupon the spaces between the laths are filled with honeycombs, preferably of cardboard, or with foam plastic material. Then, a second glue-coated panel is positioned on top of the laths and the honeycombs or foam plastic material, and this unit is glued together under pressure. The unit is thereafter sawn across the laths, and the resulting elongated pieces are rotated through 90 DEG about their longitudinal axis and positioned on a third glue-coated panel and covered with a fourth glue-coated panel, whereupon the last-mentioned panels are subjected to pressure and glued together. The resulting unit is then sawn along and between the elongated pieces, such that one obtains bodies which on all sides are covered with panel material and which internally are filled with lath material and honeycomb or foam plastic material, and which are well suited to be used as, for example, table legs. The panels may consist of fibreboard, particle board, veneer, laminate, metal sheet etc., and the laths may be made of wood or particle board.

WO 2005040524 (A1) relates to a structural member that comprises an elongated enclosure defining an inner chamber, the elongated enclosure having a longitudinally reinforcing longitudinal web positioned inwardly in the inner chamber; and at least one stiffening member filling the inner chamber and preventing the collapsing of the longitudinal web when stressed are applied to the structural member. It also relates to a method for manufacturing a high strength structural member.

US 3872641 (A) relates to constructional elements comprising two parallel plates of nailable material and one or more webs of elongated sinuous metal sheeting extending edgewise between the plates and having teeth at the edges driven into the plates for keeping them together, the sheet herein is formed at the teeth locations with a sharp bend which extends transversely of the sheet throughout its width and further into the tooth so as to provide a common stiffening of teeth and web at these locations. At the edges of the web sheet the teeth should be placed directly opposite each other. The teeth have parallel side edges extending outwardly from their base to a pointed end portion with one or more points. When using two or more points the web is formed with a separate sharp bend for each point. Between the shaped teeth also smaller flat teeth may be formed at the edges of the web sheet. Curved structures are made by separately curving the plates and the web before assembly. For stiffening the structure in longitudinal and transverse planes, two sets of web sheets are provided which extend in directions at right angles to each other and are interconnected in plane contact in portions forming 45 DEG with the main directions. For large elements, adjacent plate sections are jointed by means of a separate sinuous sheet with teeth at the edges. Where different moisture conditions on the opposite sides of the element are expected, the plates are separately conditioned in moisture content before assembly. Web sheets extending along the edges of the plates may be formed with aligned plane portions separated by sharp channel-shaped bends at which the teeth are located. Adjacent elements may be locked against relative vertical displacement by means of matching tongues and slots in fittings attached to web sheets at the edges of the elements. Watertight elements, such as elements of floating structures are made by forcing the edges of web sheets extending along the edges of the element into sealing engagement with the plates and sealingly jointing these sheets.

US 3844231 (A) relates to panel structures for supporting relatively heavily loaded, removable and adjustable shelving embodying first and second substantially planar skins and a core structure between the skins, one or both skins having a plurality of perforations arranged in a plurality of vertical columns for receiving studs or hooks of the shelf structure, the core structure including a plurality of vertical, elongated strips or slabs fixedly joined substantially continuously to respective rear faces of the skins with the edges thereof disposed between respective columns of perforations, and free spaces in the core behind the perforations.

Consequently it is an object of the present invention to provide a panel as referred to in the introduction which is also suitable for heavier applications, without thicker skin plates or skin plates of a stronger type of wood being absolutely required. This object is achieved by the present invention in that it provides a panel according to claim 1. By making the ribs of a material which is more rigid than the cardboard that has been used so far for the ribs, the ribs are capable of taking up larger forces and it is possible to use the panel for heavier applications, in other words, for taking up greater loads, and thus take up heavier loads with a panel according to the invention while using comparable skin plates. On the other hand it is possible to use less strong skin plates in comparison with the known skin plates used in the panels according to the prior art for taking up comparable forces, because the ribs will compensate the reduced strength. With a number of applications it is even possible to use a panel according to the present invention instead of a solid plank.

In a preferred embodiment of the invention, the wood material comprises multi-ply or fibreboard. These materials make it possible to manufacture comparatively strong skin plates from comparatively low-grade wood. Furthermore, fibreboard such as MDF or chipboard is a material into which wood waste can be incorporated, so that such materials can be regarded as environmentally friendly.

In a preferred embodiment of the invention, the ribs are strip- shaped and extend crosswise from one of the two skin plates to the other skin plate. Strip-shaped ribs may simply be made of board materials and can thus be produced separately from the skin plates, so that panels can be assembled as desired at a relatively late stage. a preferred embodiment of the invention, the spacing between two adjacent ribs extending parallel to each other ranges between 1 and 10 cm. This makes it possible to provide panels which on the one hand have sufficient/strength and which on the other hand are comparatively light in weight.

The ribs preferably have a width of 20 to 70 mm. The thickness of a panel is to a large extent determined by the width of the ribs and this, too, makes it possible to realise a wide range of panel thicknesses.

According to the invention, the ribs are glued to the skin plates, preferably by means of a construction glue, furthermore preferably by means of a water-resistant glue such as melamine glue. Glueing provides a strong connection between wood elements in a simple manner. Water-resistant melamine glue is impervious to moisture, so that the panels can also be used in moist environments.

According to the invention, a fibre mat, a glass fibre mat in a preferred embodiment, is provided between the ribs and the skin plates for stiffening purposes. Such fibre mats help to distribute the forces that are exerted on the skin plates over the ribs, so that a comparatively strong panel can be realised while using comparatively flexible materials for the skin plates.

In a preferred embodiment of the invention, the skin plates are provided on a framework. The framework may function both as a frame for defining the outer circumference of the panel and for contributing to the rigidity of the panel, in particular if part of the framework extends within the outer circumference of said frame, and thus of the panel. The framework it is preferably made of wood. This reduces the number of materials that are used used with such a panel.

In a preferred embodiment of the invention, the ribs are spaced from the framework. Since the dimension of the ribs is smaller than the distance they must bridge between parts of the framework at the location in question, the ribs fit comparatively easily within the framework, which facilitates the assembly of the panel.

In a preferred embodiment of the invention, at least part of the panel has been treated with a water-repellent material. This makes it possible to use the panel in moist or even wet conditions, especially if a water-resistant glue is used in the case of the ribs being glued in place.

In a preferred embodiment of the invention, the panel has a length of at least 4 m and a width of at least 25 cm. Such a combination of dimensions renders the panel suitable for use as a bearing element in scaffolding, because of the advantageous stiffness/weight ratio of such a bearing element and because of the favourable ratio of length to width, which as such corresponds to that of conventional scaffolding planks. Especially an embodiment in which the skin plates are fixed to a framework having such dimensions, in which the ribs are moreover affixed to the skin plates by means of a water-resistant construction glue, and in which the panel has been treated with a water-repellent material, is quite suitable for use in scaffolding.

The present invention further relates to the use of a panel as described in the preceding paragraphs as a bearing element for use in scaffolding. Panels according to the present invention are very suitable for being used as substitutes for scaffolding planks. Scaffolding planks are traditionally made of solid wood, because they need to be strong (rigid) enough to support persons, tools and building materials, such as bricks, mortar and the like. A drawback of solid planks is that they are comparatively heavy. The increasingly stringent safety, health and welfare legislation imposes further and further limitations as regards the maximum load a worker is allowed to carry. Because of this, the scaffolding planks must be made lighter or be carried by two persons. Making the planks lighter can be realised by reducing their size, but this has a cost-increasing effect because more operations need to be carried out for covering a comparable area when smaller planks are used. Apart from said legislation, the current scaffolding planks are difficult to handle because the planks often need to be moved in vertical direction. Finally, falling scaffolding planks, a situation which unfortunately happens rather frequently, lead to dangerous situations, as such a heavy scaffolding plank may cause serious, in some cases even fatal injury when it hits a person.

A panel according to the present invention is intended for use as a bearing element for use in a scaffolding construction, which bearing element is lighter than the traditionally used scaffolding planks and which moreover has the required constructional qualities. Depending on the selection of wood or wood material, the construction with the wooden ribs between the wooden skin plates on the one hand provides sufficient strength to meet the requirements made of a bearing element for use in scaffolding, whilst on the other hand a considerable saving in weight is achieved in comparison with scaffolding planks. Another advantage is that up to 70% less wood can be used in comparison with traditional scaffolding planks. If the embodiment of the panel that is used has been treated with a water-repellent material is used, the scaffolding board will certainly be resistant to precipitation. The embodiment comprising a fibre mat provides an even stronger scaffolding plank or makes it possible to realise an even greater saving on wood.

The present invention further relates to a scaffolding construction comprising a frame of interconnected standards and ledgers and wooden bearing elements supported on ledgers for supporting persons and/or building materials. Such scaffolding is known in the construction industry, they make use of bearing elements in the form of solid scaffolding planks. The drawback of using solid scaffolding planks has already been discussed in the foregoing, and consequently it is an object of the present invention to provide scaffolding in which the drawbacks of the use of solid scaffolding planks are at least partially overcome. This object is achieved by the present invention in that the bearing elements comprise panels according to the present invention. An important advantage of this is that the panels are easier to handle because of their comparatively low weight. A further advantage is that the overall construction of the scaffolding will be less heavy in comparison with traditional scaffolding that uses solid scaffolding planks as the bearing elements. In this way the risk of collapsing as a result of the frame being overloaded is significantly reduced, or a lighter frame can be used for constructing the scaffolding.

The present invention also relates to a method for constructing scaffolding, comprising the steps a) constructing a frame of interconnected standards and ledgers and b) placing wooden bearing elements on the ledgers. Such a method is generally known in the construction industry. Frequently a sublevel of the frame is constructed, after which bearing elements are provided, on which persons involved in the further erection of the scaffolding can subsequently position themselves. The solid scaffolding planks that have been used as bearing elements so far are comparatively heavy, and frequently the scaffolding planks are lifted by hand. As a result of the increasingly stringent safety, health and welfare legislation, equipment is sometimes used for lifting the scaffolding planks, or shorter scaffolding planks are used, so that the work can still be carried out by hand. In both cases, however, the efficiency with which the work is carried out is seriously diminished.

Consequently it is an object of the present invention to provide a method as described in the preceding paragraph wherein the efficiency of the method can be maintained or even improved whilst complying with more stringent safety, health and welfare legislation. This object is achieved by the present invention in that in step b) panels according to the present invention are placed on the ledgers as bearing elements. Step b) can be carried out after step a) has been completed, but in practice steps a) and b) are often carried out iteratively for increasing the height of scaffolding in steps. The advantage of using panels according to the present invention as bearing elements is that comparatively lightweight bearing elements are easier to handle than the scaffolding planks that have been used so far. As a result, the work involved in erecting scaffolding will be less heavy, whilst in addition comparatively large panels may be used without acting in violation of the health and safety laws.

The present invention further relates to the use of a panel according to the invention as a construction element. Many types and embodiments of construction elements are known. By using a panel according to the present invention, comparatively lightweight construction elements exhibiting a comparatively high degree of rigidity are provided, and fibres of comparatively low-grade wood types may be used, whilst a required rigidity of the construction element is nevertheless realized. Construction elements in the form of panels according to the invention may be used as substitutes for planks and other panels in various sectors, for example the construction industry and the furniture industry.

The present invention will be explained in more detail below on the basis of a few preferred embodiments of the present invention. In the description, reference will be made to the appended drawings, in which:
Figures 1a and 1b are a cutaway plan view and a cross-sectional view, respectively, of a panel
Figure 2a schematically shows the manner in which the ribs of a of the invention may be arranged relative to each other;
Figure 2b is an exploded view of the skin plates and ribs of a panel according to the present invention; and

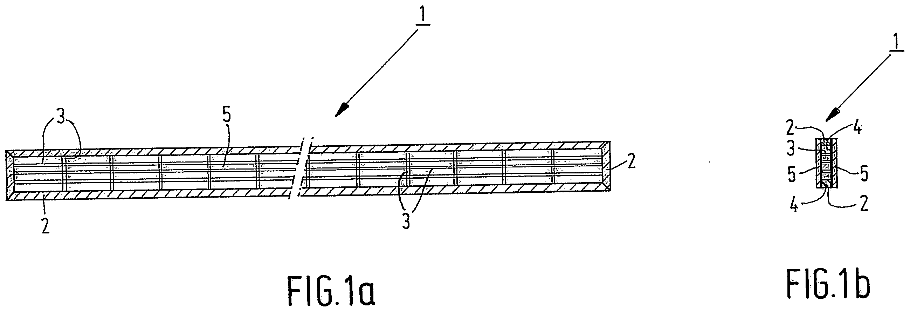

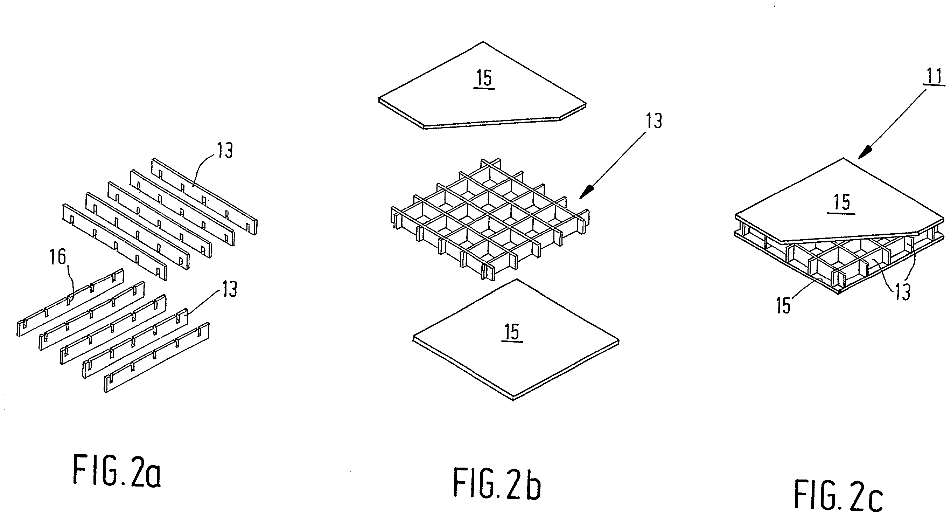

Figure 2c is a perspective view of a panel according to the invention, in which a part of the upper skin plates has been left out for easy reference. Referring to figure 1a, a plan view is shown of a panel 1 according to the present invention, whose upper skin plate and associated fibre mat have been left out in the drawing. The panel 1 comprises a wooden framework 2 of relatively thick slats, within which ribs made of MDF extend in the longitudinal direction and in the transverse direction of the panel 1. Between the ribs, the bottom side of the panel 1 can be distinguished, in this case a glass fibre mat 4 provided on a lower skin plate along the line I-I, in which ribs 3 extending in the longitudinal direction are present between the wooden framework 2 and skin plates 5, which are provided with a fibre mat on the inner side of the panel.

Figures 2a, 2b and 2c show another embodiment according to the invention of a panel 11, in which ribs 13 extend between two skin plates 15, which ribs jointly form a pattern of squares.

Referring now to figures 1a and 1b, a panel 1 is shown which is comparatively long and narrow and which is thus quite suitable for use as a scaffolding element. In figure 1a an upper skin plate 5 and the upper glass fibre mat 4 have been removed, thus providing a view of the interior of the panel for easy reference. A wooden framework 2 of planks or beams defines the outer circumference of the panel. As is shown in figure 1b, two skin plates 5 are provided on either side of the framework 2, and a glass fibre mat 4 is present on the inwardly facing sides of the skin plates 5. Said glass fibre mat 4 provides a more uniform distribution of forces on the MDF ribs 3 in the panel, especially when comparatively low-grade wood material like MDF is used for the skin plates 5. The MDF ribs 3 extend in the longitudinal direction and in the transverse direction, forming a grid for distributing the forces that are exerted on a skin plate 5, so that the panel will behave as a rigid panel. This is one of the aspects that contribute towards adapting the panel for use as a bearing element on scaffolding. Although the figures in this document are merely schematic figures, which are not drawn to scale, therefore, it may be assumed that the ribs 3 are significantly less thick than the framework 2. The framework may comprise a few cross connections, which extend between the two longitudinally extending planks or beams. Such a construction of panels is known in the prior art, but within the framework of the present invention such cross connections may be considered as components of the framework but by no means as ribs as referred to in the present invention.

Figures 2a, 2b and 2c show a panel, or at least a part thereof, which is shown in partial view and in exploded view in figures 2a and 2b. Figure 2a shows individual ribs 13, which are already oriented in the manner in which they are oriented in a panel, however, and the figures show that the ribs 13 are provided with equally spaced notches 16, via which the ribs are interlocked in a fixed orientation with respect to each other, in which crosswise, interlocked orientation the ribs are spaced a fixed distance apart.

Figure 2b shows the ribs 13 of figure 2a in an interlocked position. As the figure shows, the mating ribs form a grid of squares, and the ribs extend the same distance at the upper side and at the bottom side (not shown), so that a good contact with the skin plates 15 that are to be attached thereto is possible. Figure 2c finally shows a panel 11 in which the skin plates 15 and the ribs 13 are glued together. With this element, too, a force that is locally applied to one skin plate 15 will be distributed over the ribs 13, so that the panel will behave as a rigid panel.

The above description and the figures are merely intended by way of explanation of the invention and must by no means be construed as being limitative to the scope of the invention, which is defined in the appended claims. Alternative embodiments and further aspects are possible without departing from the scope of the present invention. Panels according to the present invention are suitable for use as substitutes for, for example, solid wooden planks, for example if rigidity in the direction perpendicular to the plane of the planks is important and/or if the weight of a device in which the panels may be used is an important aspect. The environmental aspects may play a part as well in the consideration to substitute (solid) planks for panels according to the invention, since less wood is used in the panels according to the present invention than in the case of solid planks, and moreover lower-grade wood like MDF used for skin plates than has been the case so far as a result of the rigidity-enhancing effect of the MDF ribs. Possible uses of wooden panels and planks are generally known, which is why such uses of a panel according to the present invention, for example in the construction of scaffolding and in the furniture industry, have not been explained as such in the figures and the description. The use of panels according to the present invention in scaffolding application is only an example of the various possible applications of such panels since one can easily imagine that in scaffolding large forces will be applied on the panels, and that applications wherein smaller forces are expected to be applied are thus also possible.

## Claims

1. A panel as a construction element comprising two parallel skin plates made of wood or a wood material, between which ribs extend for stiffening the panel, **characterised in that** the ribs are made of MDF and extend the same distance at the side of one of the skin plates and extend the same distance at the side of the other skin plate, wherein the ribs have a thickness of 0.5 to 2 mm, wherein the ribs are attached to the skin plates, wherein the ribs are glued to the skin plates, and wherein a fibre mat is provided between the ribs and the skin plates for stiffening purposes, wherein the ribs jointly form a pattern of squares, and wherein the ribs (13) are provided with equally spaced notches (16), via which the ribs are interlocked in a fixed orientation with respect to each other, in which crosswise, interlocked orientation the ribs are spaced a fixed distance apart.

2. A panel according to claim 1, **characterised in that** the ribs are strip-shaped and extend crosswise from one of the two skin plates to the other skin plate.

3. A panel according to claim 3, **characterised in that** the spacing between two adjacent ribs extending parallel to each other ranges between 1 and 10 cm.

4. A panel according to any one or more of the preceding claims, **characterised in that** the ribs have a width of 20 to 70 mm.

5. A panel according to any one or more of the preceding claims, **characterised in that** the skin plates are provided on a framework.

6. A panel according to any one or more of the preceding claims, **characterised in that** the ribs are spaced from the framework.

7. Use of a panel according to any one or more of the claims 6 or 7 as a bearing element for use in scaffolding.

8. Use of a panel according to any one or more of the claims 1 - 7 as a construction element.

## Patentansprüche

1. Platte als Bauelement, die zwei parallele Hautplatten aus Holz oder einem Holzwerkstoff umfasst, zwischen denen sich Rippen zur Versteifung der Platte erstrecken, **dadurch gekennzeichnet, dass** die Rippen aus MDF bestehen und sich seitlich einer der Hautplatten über die gleiche Distanz erstrecken und sich seitlich der anderen Hautplatte über die gleiche Distanz erstrecken, wobei die Rippen eine Dicke von 0,5 bis 2 mm aufweisen, wobei die Rippen an den Hautplatten befestigt sind, wobei die Rippen mit den Hautplatten verklebt sind und wobei zwischen den Rippen und den Hautplatten eine Fasermatte zu Versteifungszwecken vorgesehen ist, wobei die Rippen gemeinsam ein Muster aus Quadraten bilden und wobei die Rippen (13) mit gleichmäßig verteilten Kerben (16) versehen sind, über die die Rippen in einer festen Ausrichtung zueinander ineinandergreifen, wobei bei dieser kreuzförmigen, ineinandergreifenden Ausrichtung die Rippen in einem festen Abstand beabstandet sind.

2. Platte nach Anspruch 1, **dadurch gekennzeichnet, dass** die Rippen streifenförmig gebildet sind und sich quer von einer der beiden Hautplatten zu der anderen Hautplatte erstrecken.

3. Platte nach Anspruch 3, **dadurch gekennzeichnet, dass** der Abstand zwischen zwei benachbarten Rippen, die sich parallel zueinander erstrecken, zwischen 1 und 10 cm beträgt.

4. Platte nach einem oder mehreren der vorhergehenden Ansprüche, **dadurch gekennzeichnet, dass** die Rippen eine Breite von 20 bis 70 mm aufweisen.

5. Platte nach einem oder mehreren der vorhergehenden Ansprüche, **dadurch gekennzeichnet, dass** die Hautplatten auf einem Rahmen vorgesehen sind.

6. Platte nach einem oder mehreren der vorhergehenden Ansprüche, **dadurch gekennzeichnet, dass** die Rippen von dem Rahmen beabstandet sind.

7. Verwendung einer Platte nach einem oder mehreren der Ansprüche 6 oder 7 als tragendes Element für die Verwendung im Gerüstbau.

8. Verwendung einer Platte nach einem oder mehreren der Ansprüche 1 - 7 als Konstruktionselement.

## Revendications

1. Panneau en tant qu'élément de construction comprenant deux plaques de revêtement parallèles en bois ou en matériau à base de bois, entre lesquelles s'étendent des nervures pour rigidifier le panneau, **caractérisé en ce que** les nervures sont en MDF et s'étendent sur la même distance du côté de l'une des plaques de revêtement et s'étendent sur la même distance du côté de l'autre plaque de revêtement, où les nervures ont une épaisseur de 0,5 à 2 mm, où les nervures sont fixées aux plaques de revêtement, où les nervures sont collées aux plaques de revêtement, et où un tapis de fibres est prévu entre les nervures et les plaques de revêtement à des fins de rigidification, où les nervures forment conjointement un motif de carrés, et où les nervures (13) sont pourvues d'encoches également espacées (16), via lesquelles les nervures sont imbriquées dans une orientation fixée les unes par rapport aux autres, où, dans ladite orientation transversale et imbriquée, les nervures sont espacées d'une distance fixée.

2. Panneau selon la revendication 1, **caractérisé en ce que** les nervures sont en forme de bande et s'étendent transversalement de l'une des deux plaques de revêtement à l'autre plaque de revêtement.

3. Panneau selon la revendication 3, **caractérisé en ce que** l'espacement entre deux nervures adjacentes s'étendant parallèlement l'une à l'autre est compris entre 1 et 10 cm.

4. Panneau selon l'une quelconque ou plusieurs des revendications précédentes, **caractérisé en ce que** les nervures ont une largeur de 20 à 70 mm.

5. Panneau selon l'une quelconque ou plusieurs des revendications précédentes, **caractérisé en ce que** les plaques de revêtement sont prévues sur une structure.

6. Panneau selon l'une quelconque ou plusieurs des revendications précédentes, **caractérisé en ce que** les nervures sont espacées de la structure.

7. Utilisation d'un panneau selon l'une quelconque ou plusieurs des revendications 6 ou 7 comme élément porteur destiné à être utilisé dans un échafaudage.

8. Utilisation d'un panneau selon l'une quelconque ou plusieurs des revendications 1 à 7 comme élément de construction.
